# EUROPEAN PATENT SPECIFICATION

(11) **EP 4 122 686 B1**
(45) Date of publication and mention of the grant of the patent: **28.01.2026**
(21) Application number: 21186964.9
(22) Date of filing: 21.07.2021
(51) Int. Cl.: B29C 73/10, B64F 5/40, B29C 35/02

(54) **METHOD FOR REPAIRING A THERMOPLASTIC COMPOSITE LAMINATE STRUCTURE AND REPAIR PATCH USED THEREIN**
VERFAHREN ZUR REPARATUR EINER THERMOPLASTISCHEN VERBUNDLAMINATSTRUKTUR UND REPARATURPFLASTER DAFÜR
PROCÉDÉ DE RÉPARATION DE STRUCTURE STRATIFIÉE COMPOSITE THERMOPLASTIQUE ET PATCH DE RÉPARATION UTILISÉ DANS CELUI-CI

(43) Date of publication of application: 25.01.2023
(73) Proprietor: Airbus Operations GmbH, 21129 Hamburg (DE)
(72) Inventor: Finger, Lennart, 21129 Hamburg (DE); Hinz, Remo, 21129 Hamburg (DE)
(74) Representative: KASTEL Patentanwälte PartG mbB

(56) References cited:
- US-A- 4 560 428
- US-A1- 2008 281 554
- US-B2- 10 343 761

## Description

The invention relates to a method for repairing a thermoplastic composite laminate structure. The invention further relates to a repair patch.

In a current resistance welding process for thermoplastic materials, a stainless steel mesh is used in between two join partners to generate heat by applying an electric current. The mesh is commonly referred to as "heating element" and may come in multiple geometries and materials. The join partners are currently mainly consisting of glass or carbon fibers embedded in a thermoplastic matrix and consolidated into laminates.

During the heating, a certain amount of pressure is applied on the join zone to achieve a weld. A lot of expertise has been recently developed for this type of thermoplastic welding technology.

For current in-service repairs, if a damage in a composite part is detected, it is usually repaired by sanding and subsequently applying repair plies.

Usually the damage is scarfed down and thus eliminates it. The repair zone is then filled by using a patch, made from the same material and ply lay-up as the original composite part. For example, for an epoxy repair the patch is laid into the repair zone and then the whole area is heated by using a so called warm air box, with a vacuum pressure applied to the repair zone. The heat and pressure cure the repair patch and the parts structural integrity is restored.

An example for patches is disclosed in US 5 407 514 A.

US 10 343 761 B2 discloses a method that sufficiently heats a repairing material while preventing change in quality of a base material provided with the repairing material so as to securely bond the repairing material to a repair target portion.

US 4 560 428 A discloses a method for producing a composite applicable for repairing damage to a structural component, wherein an electrical resistance heating element basically in the form of a layer of conductive carbon or graphite becomes bonded to and forms a part of the cured composite.

US 2008 / 0 281 554 A1 discloses a composite repair method for assisting in the repair of a cured composite part in which a damaged portion has been cut out and removed, exposing a plurality of composite plies and their corresponding composite ply edges. Imaging is used to manufacture filler plies having peripheral edges shaped to correspond with the composite ply edges for replacing the damaged portion of the composite part.

It is the object of the invention to improve repair and maintenance of composite parts, preferably for aircraft.

The object is achieved by the subject-matter of the independent claims. Preferred embodiments are subject-matter of the dependent claims.

The invention provides a method for repairing a thermoplastic composite laminate structure of a vehicle, preferably an aircraft, the method comprising:
a) detecting a damage portion within the laminate structure;
b) at the damage portion, polishing or scarfing the laminate structure in order to provide a repair zone;
c) choosing from a set of prefabricated repair patches a specific type of repair patch for repairing the laminate structure based on the repair zone, wherein each repair patch includes a thermoplastic material and a heating element;
d) arranging the repair patch on the repair zone such that the heating element engages the laminate structure and energizing the repair patch, so as to weld the repair patch to the laminate structure.

Preferably, step b) includes polishing or scarfing the laminate structure down to a damaged layer of the laminate structure and/or removing the damage portion of the damaged layer.

Preferably, step d) includes choosing from a set of predetermined welding parameters a specific welding parameter or subset of welding parameters based on the specific type of the repair patch with which the welding to the laminate structure is performed.

Preferably, the heating element is embedded in the thermoplastic material and/or insulating material. Preferably, the heating element includes a metal mesh or carbon fibers. Preferably, the heating element extends over a patch surface that faces the laminate structure.

Preferably, the set of prefabricated repair patches comprises repair patches having a rectangular shape, square shape, circular shape or ellipsoidal shape, each shape being available with a predetermined number of discrete sizes.

Preferably, in step d) a welding voltage, a welding current and/or a welding power per surface area are chosen as the welding parameter or subset of welding parameters.

Preferably, step d) comprises pressing the repair patch against the laminate structure during welding.

Preferably, the pressing is done by vacuum bag and/or caul plates and/or electro-magnetic forces.

Preferably, the welding parameters are predetermined in an experimental setting and stored in a database for later use in step d).

The invention provides a repair patch for use in a method according to any of the preceding claims, the repair patch comprising a layer structure that has a plurality of layers and includes a thermoplastic material; and a heating element that is integral with the layer structure.

The heating element is arranged on an outside layer of the layer structure and integrally formed with the outside layer, so as to cover half or more of the surface area of the outside layer.

Preferably, the repair patch is made of a fiber composite material that includes fibers that are embedded in a thermoplastic matrix. Preferably, the thermoplastic matrix melts at temperatures of 280 °C and 400 °C, more preferably at 305 °C and 350 °C. Preferably, the thermoplastic matrix includes polyaryletherketone (PAEK). Preferably, the thermoplastic matrix includes polyetheretherketone (PEEK) or polyetherketoneketone (PEKK).

This idea relates to the fields of in-service aircraft repairs and welding of fiber-reinforced thermoplastic materials. One of the many advantages of these parts is its weldability, which is a dustless and fast process for assembling parts. Welding itself can be used to fully substitute riveting/bolting in an aircraft assembly. Also, it is projected to be a fast and cheap process.

A number of different welding processes are known including ultrasonic welding, resistance welding, infrared welding, induction welding, laser welding. The ideas discussed herein specifically relate to the field of resistance welding (RW). RW has been used to weld a rib onto a skin for the Airbus A380 J-Nose part (leading edge of the wing), for example. Resistance welding specifically is a very stable process with a limited amount of input parameters and low investment cost.

During the life cycle of an aircraft, it is not unusual to have parts replaced or repaired due to a damage that occurred during flight operations, e.g. bird strike, lightning strike, etc. or damage which occurred at the airport, e.g. contact with ground equipment.

The corresponding repairs then have to be carried out at one of the airlines home airports or even remote locations. Also, the methods for metallic and composite repairs vary greatly. The ideas presented herein are mainly dealing with composite repairs of composites with thermoplastic matrix systems instead of the currently used epoxy, which is opening up a multitude of new opportunities.

The ideas utilize the stable and well-known resistance welding process. In case of a damage in the thermoplastic fuselage, it is sensible to resort to welding technology to introduce a repair patch. Resistance welding is one of the technologies where the heat is generated directly in the join zone, i.e. not by proxy, e.g. through the part thickness. This makes for a process which should be rather insensitive against environmental influences and stable and thus well suited for in-service repairs at various locations, be it in airport hangars or out in the open on the airport tarmac.

Another advantage is the very uniform heat distribution among the join zone which can be achieved using heating elements which are perfectly tailored for each patch geometry. The heating element may either comprise a standard mesh-type heating element or a conductor with another geometry which might help in recreating complex shapes or ease contacting.

The pressure application may happen by numerous methods, however one example would be pressure application by using a vacuum bag, similar to current thermoset repair methods. Other means of pressure application may also include caul plates and electromagnetic forces.

The main idea of the invention is to generally standardize the patch sizes and - where applicable - the welding parameters. This is to enable the manufacturing and supply of pre-manufactured patches with heating elements already integrated. These should be manufactured at another site, as the high-performance thermoplastic currently investigated require very high temperatures usually close to but below 400°C), which cannot necessarily be provided by a warm air box or similar apparatus. Each repair station then has a certain number of standard repair patches supplied. The patches are preferably manufactured by the aircraft manufacturer or specialized manufacturers. If available, the patches could be manufactured on-site, too. Prerequisite would be the corresponding know-how and facilities to work with modern high-performance thermoplastics, such as PAEK. This however requires cost-intense equipment such a press, material and tooling. Additionally, the qualification process for workers can be long and costly, too. So while not impossible, it is rather preferred that the airports and repair hubs procure the patches from a single source. In contrast to epoxy systems, thermoplastic patches do not require special storage conditions. Hence, they can be held easier available, even if temperatures and humidity are varying.

If a damage is encountered, the damage is being removed by the standard scarfing method, which is working for epoxy and thermoplastics alike. The only constraint is that the size of the repair zone shall be standardized too, depending on the damage size, so that for each repair zone a certain patch is going to fit. It is also possible - for a temporary repair - to attach the patch above the damage on a ground or polished surface instead of scarfing..

For the repair patch introduction: The corresponding repair patch is chosen and fit into the welding zone.

As the resistance welding process is rather stable, there will be a predetermined set of parameters (such as voltage, current or power per surface) for each patch size. These parameters will then be set on the welding unit and welding can start. Those welding units can be designed rather cheap, because basically a standard DC power supply is needed. The input parameters should be only dependent on patch size, patch location and pressure application means (which can be standardized, too.) In case of extreme weather, the input parameters may also need amendments, but this is highly unlikely. Rather, the parameters take into account temperature variations which may be quite substantial at certain repair locations.

Although described herein with reference to a flat repair patch, the skilled person will understand it to be possible to create single-curved or double-curved patches with integrated heating elements via thermoplastic technologies such as press forming. For fuselage applications, the standard patch is preferably single-curved according to the radius of the fuselage to be repaired.

Consequently, for thermoplastic repair patch integration there can be a catalogue of standard repair locations and sizes depending on the damage and a corresponding set of input parameters depending on patch size, patch location and means of pressure application.

The advantage is that a standard type of repairs is possible, this means that availability of repair equipment is going to be much easier at all airports around the world: Instead of having many materials and equipment available for all types of repairs, these ideas offer a standard repair method which works for multiple locations and limits the amount of material needed in stock.

It should be noted that the application of this concept is not limited to aircraft repairs but any thermoplastic composite structure.

Embodiments of the invention are described in more detail with reference to the accompanying schematic drawings that are listed below
- Fig. 1: depicts an embodiment of a repair method; and
- Fig. 2: depicts different sized damage portions warranting multiple patch sizes.

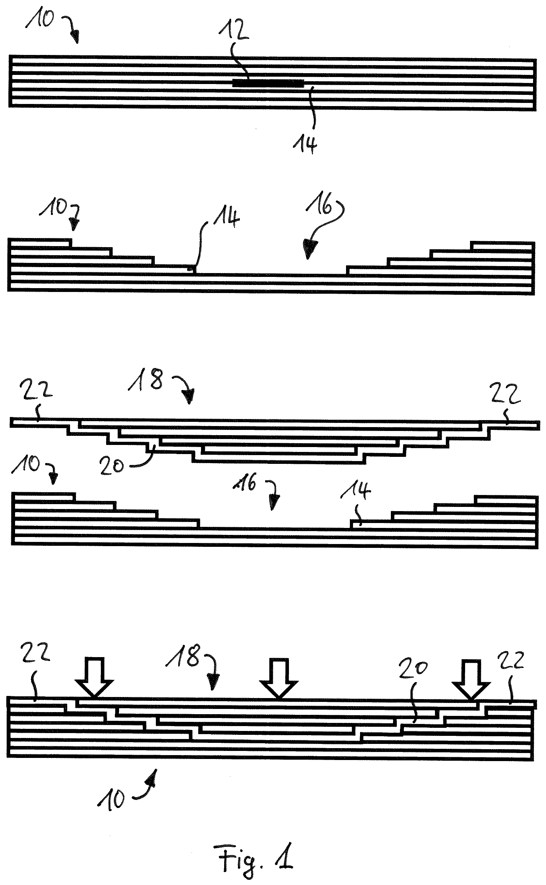

Fig. 1 depicts a thermoplastic composite laminate structure 10. The laminate structure 10 may be a portion of an aircraft fuselage or wing, for example. The laminate structure 10 includes a damage portion 12. The damage portion 12 is detected using ultrasound, for example. It should be noted that any other technique for detecting defects in laminate structures may be used.

After locating the damage portion 12 the laminate structure 10 is scarfed down to the damaged layer 14, which is partially removed. The layers of the laminate structure 10 typically form a step structure after scarfing. With this, a repair zone 16 is generated which can be used to restore the laminate structure 10.

Based on the location and size of the repair zone 16 a suitable repair patch 18 is chosen. Usually, a set of different size and shape repair patches 18 is kept in stock at a repair site. The repair patch 18 is prefabricated and standardized. In contrast to the known procedures, which can be applied at any airport or repair hub today, the repair patches 18 are specifically designed to enable this to continue for future aircraft that make use of high-performance thermoplastics.

The repair patch 18 is arranged at the repair zone 16. The repair patch 18 includes a thermoplastic material, preferably the same as the matrix of the laminate structure 10 to be repaired. The repair patch 18 can have a layer structure. The repair patch 18 may include fibers and be configured as a fiber laminate composite.

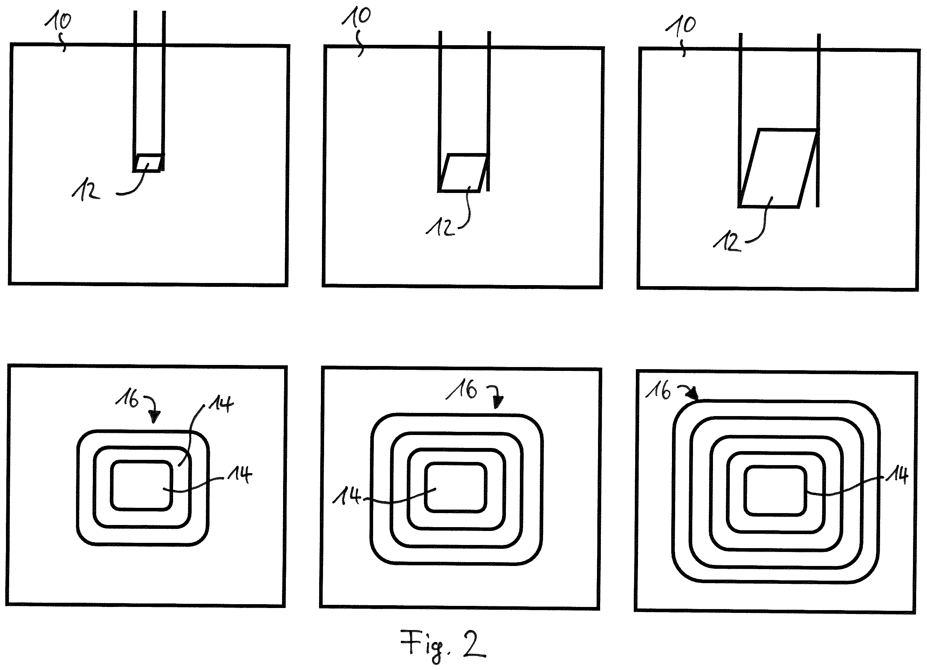

Fig. 2 illustrates different sized damage portions 12, each warranting a specific size of repair patch 18.

The repair patch 18 includes a heating element 20 that is arranged on an outside layer that faces the repair zone 16, when arranged at the repair zone 16. The heating element 20 may be configured as a metal mesh that is embedded in the thermoplastic material. The metal mesh is preferably formed by equidistant wires that have the same diameter, in order to ensure a uniform current distribution. It is also possible that the heating element 20 is formed by a carbon fiber layer. The heating element 20 is insulated from neighboring layers, in order to contain the welding current and enable a defined heat generation. The heating element 20 may be insulated by glass fiber layers or similar insulating layers that may or may not include thermoplastic matrix material. The heating element 20 has terminals 22 for connecting to an electric energy supply.

The repair patch 18 is arranged at the repair zone 16, so as to fully cover it. The terminals 22 are connected to the energy supply and the heating element 20 is energized using predetermined welding parameters that include welding voltage and welding current. The welding parameters are predetermined in an experimental setup and stored in a database. At the repair site, the worker merely selects the type of repair patch 18 (which includes size and/or shape) and location. The repair patch 18 can be flat, single curved or double curved depending on the location of the repair zone 16.

Then the energy supply energizes the heating element 20 using the predetermined welding parameters. The welding voltage and/or welding current increase with the size of the repair patch 18. Furthermore, the welding voltage and/or welding current are larger for repairs of wings than of the fuselage.

During welding the repair patch 18 is pressed onto the laminate structure 10 by a vacuum bag or caul plates. It is also possible to press the repair patch 18 using electromagnetic force.

In order to improve repair and maintenance of composite parts of aircraft, such as the fuselage or wing, the invention proposes a repair method and associated repair patch (18). After detecting the presence of a damage portion (12), the laminate structure (10) is scarfed. Subsequently, the prefabricated repair patch (18) is chosen according to the size of the damage portion (12). Based on the choice of repair patch (18), welding parameters are chosen which were predetermined by experiment and stored for future use. The repair patch (18) is then welded while being pressed to the laminate structure (10) for repair by means of an integrated heating element (20) that is energized based on the predetermined welding parameters.

### List of reference signs:

- 10: laminate structure
- 12: damage portion
- 14: damaged layer
- 16: repair zone
- 18: repair patch
- 20: heating element
- 22: terminal

## Claims

1. A method for repairing a thermoplastic composite laminate structure (10) of a vehicle, the method comprising:
a) detecting a damage portion (12) within the laminate structure (10);
b) at the damage portion (12), polishing or scarfing the laminate structure (10) in order to provide a repair zone (16);
c) choosing from a set of prefabricated repair patches (18) a specific type of repair patch (18) for repairing the laminate structure (10) based on the repair zone (16), wherein each repair patch (18) includes a thermoplastic material and a heating element (20);
d) arranging the repair patch (18) on the repair zone (16) such that the heating element (20) engages the laminate structure (10) and energizing the repair patch (18), so as to weld the repair patch (18) to the laminate structure (10).

2. The method according to claim 1, wherein step b) includes polishing or scarfing the laminate structure (10) down to a damaged layer (14) of the laminate structure (10) and/or removing the damage portion (12) of the damaged layer (14).

3. The method according to any of the preceding claims, wherein step d) includes choosing from a set of predetermined welding parameters a specific welding parameter or subset of welding parameters based on the specific type of the repair patch (18) with which the welding to the laminate structure (10) is performed.

4. The method according to any of the preceding claims, wherein the heating element (20) is embedded in the thermoplastic material and/or an insulating material.

5. The method according to any of the preceding claims, wherein the heating element (20) includes a metal mesh or carbon fibers.

6. The method according to any of the preceding claims, wherein the heating element (20) extends over a patch surface that faces the laminate structure (10).

7. The method according to any of the preceding claims, wherein the set of prefabricated repair patches (18) comprises repair patches (18) having a rectangular shape, square shape, circular shape or ellipsoidal shape, each shape being available with a predetermined number of discrete sizes.

8. The method according to any of the preceding claims, wherein in step d) a welding voltage, a welding current and/or a welding power per surface area are chosen as the welding parameter or subset of welding parameters.

9. The method according to any of the preceding claims, wherein step d) comprises pressing the repair patch (18) against the laminate structure (10) during welding.

10. The method according to claim 9, wherein the pressing is done by vacuum bag and/or caul plates and/or electro-magnetic forces.

11. The method according to any of the preceding claims, wherein the welding parameters are predetermined in an experimental setting and stored in a database for later use in step d).

12. A repair patch (18) for use in a method according to any of the preceding claims, the repair patch (18) comprising a layer structure (10) that has a plurality of layers and includes a thermoplastic material; and a heating element (20) that is integral with the layer structure **characterized in that** the heating element (20) is arranged on an outside layer of the layer structure (10) and integrally formed with the outside layer, so as to cover half or more of the surface area of the outside layer.

13. The repair patch (18) according to claim 12, wherein the repair patch (18) is made of a fiber composite material that includes fibers that are embedded in a thermoplastic matrix.

## Patentansprüche

1. Verfahren zum Reparieren einer thermoplastischen Verbundlaminatstruktur (10) eines Fahrzeugs, wobei das Verfahren umfasst:
a) Erfassen eines Schadensabschnitts (12) in der Laminatstruktur (10);
b) Polieren oder Flämmen der Laminatstruktur (10) an dem Schadensabschnitt (12), um eine Reparaturzone (16) bereitzustellen;
c) Auswählen eines spezifischen Typs von Reparaturflicken (18) aus einem Satz von vorgefertigten Reparaturflickenen (18) zum Reparieren der Laminatstruktur (10) auf der Grundlage der Reparaturzone (16), wobei jedes Reparaturflicken (18) ein thermoplastisches Material und ein Heizelement (20) enthält;
d) Anordnen des Reparaturflickens (18) auf der Reparaturzone (16), so dass das Heizelement (20) mit der Laminatstruktur (10) in Eingriff steht, und Erregen des Reparaturflickens (18), um das Reparaturflicken (18) mit der Laminatstruktur (10) zu verschweißen.

2. Verfahren nach Anspruch 1, wobei Schritt b) Polieren oder Flämmen der Laminatstruktur (10) bis hinab zu einer beschädigten Schicht (14) der Laminatstruktur (10) und/oder Entfernen des Schadensabschnitts (12) der beschädigten Schicht (14) einschließt.

3. Verfahren nach einem der vorstehenden Ansprüche, wobei Schritt d) Auswählen eines spezifischen Schweißparameters oder eines Teilsatzes von Schweißparametern aus einem Satz von vorgegebenen Schweißparametern auf der Grundlage des spezifischen Typs des Reparaturflickens (18), mit dem das Schweißen an die Laminatstruktur (10) durchgeführt wird, einschließt.

4. Verfahren nach einem der vorstehenden Ansprüche, wobei das Heizelement (20) in das thermoplastische Material und/oder ein Isoliermaterial eingebettet ist.

5. Verfahren nach einem der vorstehenden Ansprüche, wobei das Heizelement (20) ein Metallnetz oder Kohlenstofffasern enthält.

6. Verfahren nach einem der vorstehenden Ansprüche, wobei das Heizelement (20) über eine Flickenoberfläche verläuft, die der Laminatstruktur (10) zugewandt ist.

7. Verfahren nach einem der vorstehenden Ansprüche, wobei der Satz von vorgefertigten Reparaturflicken (18) Reparaturflickene (18) mit einer rechteckigen Form, quadratischen Form, kreisförmigen Form oder ellipsenartigen Form umfasst, wobei jede Form mit einer vorgegebenen Anzahl von diskreten Größen verfügbar ist.

8. Verfahren nach einem der vorstehenden Ansprüche, wobei bei Schritt d) eine Schweißspannung, ein Schweißstrom und/oder eine Schweißleistung pro Oberfläche als der Schweißparameter oder Teilsatz von Schweißparametern ausgewählt wird.

9. Verfahren nach einem der vorstehenden Ansprüche, wobei Schritt d) Pressen des Reparaturflickens (18) gegen die Laminatstruktur (10) während des Schweißens umfasst.

10. Verfahren nach Anspruch 9, wobei das Pressen durch Vakuumbeutel und/oder Druckplatten und/oder elektromagnetische Kräfte durchgeführt wird.

11. Verfahren nach einem der vorstehenden Ansprüche, wobei die Schweißparameter in einer experimentellen Einstellung vorgegeben und in einer Datenbank zur späteren Verwendung bei Schritt d) gespeichert werden.

12. Reparaturflicken (18) zur Verwendung bei einem Verfahren nach einem der vorstehenden Ansprüche, wobei das Reparaturflicken (18) eine Schichtstruktur (10) umfasst, die eine Vielzahl von Schichten aufweist und ein thermoplastisches Material enthält; und ein Heizelement (20), das integral mit der Schichtstruktur ist, **dadurch gekennzeichnet, dass** das Heizelement (20) auf einer Außenschicht der Schichtstruktur (10) angeordnet und integral mit der Außenschicht gebildet ist, um die Hälfte oder mehr der Oberfläche der Außenschicht zu bedecken.

13. Reparaturflicken (18) nach Anspruch 12, wobei das Reparaturflicken (18) aus einem Faserverbundmaterial hergestellt ist, das Fasern enthält, die in eine thermoplastische Matrix eingebettet sind.

## Revendications

1. Procédé destiné à réparer une structure stratifiée composite thermoplastique (10) d'un véhicule, le procédé comprenant :
a) la détection d'une partie endommagée (12) à l'intérieur de la structure stratifiée (10) ;
b) au niveau de la partie endommagée (12), le polissage ou l'entaillage de la structure stratifiée (10) afin d'obtenir une zone de réparation (16) ;
c) le choix, parmi un ensemble de pièces de réparation préfabriquées (18), d'un type spécifique de pièce de réparation (18) en vue de réparer la structure stratifiée (10) sur la base de la zone de réparation (16), chaque pièce de réparation (18) comportant un matériau thermoplastique et un élément chauffant (20) ;
d) la mise en place de la pièce de réparation (18) sur la zone de réparation (16) de telle sorte que l'élément chauffant (20) entre en prise avec la structure stratifiée (10) et alimente la pièce de réparation (18), de manière à souder la pièce de réparation (18) à la structure stratifiée (10).

2. Procédé selon la revendication 1, dans lequel l'étape b) comporte le polissage ou l'entaillage de la structure stratifiée (10) jusqu'à une couche endommagée (14) de la structure stratifiée (10) et/ou le retrait de la partie endommagée (12) de la couche endommagée (14).

3. Procédé selon l'une quelconque des revendications précédentes, dans lequel l'étape d) comporte le choix, parmi un ensemble de paramètres de soudage prédéterminés, d'un paramètre de soudage spécifique ou d'un sous-ensemble de paramètres de soudage basés sur le type spécifique de la pièce de réparation (18) avec laquelle le soudage à la structure stratifiée (10) est effectué.

4. Procédé selon l'une quelconque des revendications précédentes, dans lequel l'élément chauffant (20) est incorporé dans le matériau thermoplastique et/ou un matériau isolant.

5. Procédé selon l'une quelconque des revendications précédentes, dans lequel l'élément chauffant (20) comporte un treillis métallique ou des fibres de carbone.

6. Procédé selon l'une quelconque des revendications précédentes, dans lequel l'élément chauffant (20) s'étend sur une surface de pièce qui fait face à la structure stratifiée (10).

7. Procédé selon l'une quelconque des revendications précédentes, dans lequel l'ensemble de pièces de réparation préfabriquées (18) comprend des pièces de réparation (18) ayant une forme rectangulaire, une forme carrée, une forme circulaire ou une forme ellipsoïdale, chaque forme étant disponible dans un nombre prédéterminé de tailles discrètes.

8. Procédé selon l'une quelconque des revendications précédentes dans lequel, à l'étape d), une tension de soudage, un courant de soudage et/ou une puissance de soudage par unité de surface sont choisis pour le paramètre de soudage ou le sous-ensemble de paramètres de soudage.

9. Procédé selon l'une quelconque des revendications précédentes, dans lequel l'étape d) comprend le pressage de la pièce de réparation (18) contre la structure stratifiée (10) pendant le soudage.

10. Procédé selon la revendication 9, dans lequel le pressage est effectué avec une poche à vide et/ou des plaques de presse et/ou des forces électromagnétiques.

11. Procédé selon l'une quelconque des revendications précédentes, dans lequel les paramètres de soudage sont prédéterminés dans un dispositif expérimental et stockés dans une base de données pour une utilisation ultérieure à l'étape d).

12. Pièce de réparation (18) destinée à être utilisée dans un procédé selon l'une quelconque des revendications précédentes, la pièce de réparation (18) comprenant une structure en couches (10) qui comporte une pluralité de couches et comporte un matériau thermoplastique ; et un élément chauffant (20) qui fait partie intégrante de la structure en couches, **caractérisée en ce que** l'élément chauffant (20) est disposé sur une couche extérieure de la structure en couches (10) et formé d'une seule pièce avec la couche extérieure, de manière à recouvrir au moins la moitié de la superficie de la couche extérieure.

13. Pièce de réparation (18) selon la revendication 12, la pièce de réparation (18) étant constituée d'un matériau composite fibreux qui comporte des fibres qui sont incorporées dans une matrice thermoplastique.
